# EUROPEAN PATENT APPLICATION

(11) **EP 3 711 485 A1**
(43) Date of publication of application: **23.09.2020**
(21) Application number: 19163727.1
(22) Date of filing: 19.03.2019
(51) Int. Cl.: A01N 25/30, A01N 33/12, A01N 57/34, A01N 61/00, A01P 1/00

(54) **SYNERGISTIC BIOCIDAL COMPOSITIONS AND METHODS FOR USING SAME**

(71) Applicant: Rhodia Operations, 93300 Aubervilliers (FR)
(72) Inventor: RISSI TORRES, Eder, 13080-655 Campinas (BR); DIAS, Fernanda, São Paulo, 13106-016 (BR); JONES, Chris, Walsall, WS6 7BS (GB); ARMSTRONG, Charles David, Tomball, Texas 77377 (US)
(74) Representative: Ridray, Annabelle

(57) **Abstract**

A biocidal compositions including a tetrakis(hydroxyalkyl)phosphonium salt biocide, wherein the salt is selected from sulphate, phosphite, bromide, fluoride, chloride, phosphate, carbonate, acetate, formate, citrate, borate, and silicate; a biopenetrant, wherein the biopenetrant includes a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having such monomers incorporated into the polymer backbone; quaternary ammonium cationic surfactant, and an amphoteric surfactant. This composition enhances the biocidal efficacy of the THP salt against both planktonic (free-swimming) and sessile (attached) bacteria and archaea and enhances the efficacy of the THP salt in the dissolution of iron sulphide scale.

## Description

### FIELD OF THE INVENTION

This invention relates to synergistic biocidal compositions comprising a tetrakis(hydroxyalkyl)phosphonium salt (THP salt), a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer backbone, quaternary ammonium cationic surfactant, and amphoteric surfactant. The present invention also relates to the treatment of a water system contaminated with microorganisms, using a method that disrupts microbial activity, e.g. it may disrupt bacterial activity. The method therefore prevents or reduces the detrimental effects from the presence of active microorganisms, such as bacteria, and archaea.

### BACKGROUND OF THE INVENTION

Biological contamination is a costly and undesirable phenomenon that can occur in hydrocarbon-containing systems such as oil and gas reservoirs, processing and injection systems, transmission and pipelines or storage tanks.

To increase the yield from hydrocarbon-containing reservoirs, water is pumped under pressure into the reservoir, to shepherd the crude hydrocarbon towards the production wells and to maintain reservoir pressure. This water is therefore injected into the reservoir, passes through the reservoir and then leaves the reservoir (as "produced water"). The water used is commonly seawater. Further, the water will be de-aerated in order to avoid corrosion. The injection of cold de-aerated seawater can provide a number of key elements for biological contamination. For example, the cooling effect of the seawater reduces the temperature around the injector to within the thermal viability limits of prokaryotes. The pH of the seawater is also within the required range for microbial activity. Therefore biological contamination of such reservoirs can easily become a problem.

Biological contamination can result in various detrimental effects from the presence of active microorganisms, such as bacteria and archaea, in the hydrocarbon-containing reservoirs and process waters. These detrimental effects include biofouling, corrosion, and biological souring.

The activity of sulfate-reducing prokaryotes (SRP) within hydrocarbon-containing reservoirs is known to cause significant problems for the industry. This is due to metabolic H₂S production leading to problems such as souring and corrosion of pipelines and production facilities.

Biological souring involves sulphate-reducing prokaryotes (SRP) consuming carbon and reducing sulphate to generate hydrogen sulphide. Once established, the microorganisms can multiply and spread throughout the reservoir resulting in a potentially rapid rise in hydrogen sulphide production.

In addition, other microorganisms are known to be problematic. In particular, methanogenic archaea have been detected in high numbers (up to 10⁸ cells per gram solids) in oil production facilities. It is believed that methanogenic species are involved in microbially-induced corrosion (MIC), due to them consuming hydrogen and CO₂ in the production of methane. Additionally, some strains of methanogenic species (e.g. *Methanosarcinales* species) can produce H₂S in their metabolisms, therefore leading to problems such as souring and corrosion of pipelines and production facilities.

In order for biological souring to occur, three conditions must be met:
1. There have to be sulphate-reducing prokaryotes (SRP) present. These may be sulphate-reducing bacteria (SRB) and/or sulphate-reducing archaea (SRA).
**2.** The substrates required for microbial proliferation must be present in sufficient amounts. Generally, in order to proliferate, SRP require the availability of metabolisable carbon and sulphate substrates, in addition to the usual elements essential for biomass growth such as phosphate, nitrogen, and trace metals.
**3.** The environmental conditions, such as pH, temperature, redox potential and pressure, must be within the ranges that permit the SRP to function.

De-aerated seawater provides suitable reducing conditions for the SRP and the high sulphate levels provide the required sulphur source. Therefore biological souring is commonly encountered in hydrocarbon-containing reservoirs, where seawater is pumped under pressure into the reservoir.

Reservoir souring has been defined as a concentration of 3 ppm or greater, by volume, of hydrogen sulphide gas (H₂S) in the produced fluid (R.D. Eden, P.J. Laycock and M. Fielder, 1993, Offshore Technology Report OTH 92 385, Health and Safety Executive, URL: < http://www.hse.gov.uk/research/othpdf/200-399/oth385.pdf>). Hydrogen sulphide is highly undesirable in the produced fluids since it is toxic and highly corrosive to production tubulars and processing equipment, and, if hydrogen sulphide is present as a contaminant this adversely affects the sales quality of the oil and gas.

The generation of hydrogen sulphide in hydrocarbon-containing systems can therefore have health and safety implications, may cause corrosion of steel and other materials, and may give rise to costs associated with scavenging the hydrogen sulphide from the hydrocarbon fluids. It is therefore desirable to prevent or reduce the generation of hydrogen sulphide in hydrocarbon-containing systems.

There are three known options for dealing with biological reservoir souring:
1. Preventing or inhibiting the establishment of SRP within a reservoir (known as keeping the reservoir "sweet").
2. Remediating a reservoir that has already soured, through the use of a biocide to destroy the SRP.
3. Dealing with the produced H₂S gas, for example, through dosing with scavenger chemicals.

Generally, biological contamination of systems, such as biofouling, corrosion, and biological souring, will be addressed by adding biocide to the system, in order to destroy, or control the activity of, the microorganisms or other bacteria that are causing the detrimental effects. This is the case for sulfate-reducing prokaryotes (SRP), such as sulphate-reducing bacteria (SRB) and/or sulphate-reducing archaea (SRA), and for other problematic microbes, in particular methanogenic species such as methanogenic archaea.

The region of reservoir that is suitable for microbial activity is termed the thermal viability shell (TVS). The injection of fluid that is cool, relative to the ambient reservoir temperature, results in a reduction in temperature and this permits the activity of microorganisms that would otherwise be incapable of functioning at the ambient reservoir temperature. Thus over the production life of the reservoir the TVS will grow, increasing the volume of reservoir capable of supporting biological activity.

Tetrakis(hydroxymethyl)phosphonium sulphate (THPS) has been used as a biocide in the role of remediation. THPS has a biocidal effect on various gram positive and gram negative bacteria and its proven effect on archaea confirms THPS can impact a variety of cell structures. A typical commercial THPS is a 75 wt.% THPS biocidal solution, typically known in the industry as THPS 75% or THPS 75. THPS 75 is a broad-spectrum biocide developed to inhibit growth of algae, bacteria, yeasts and fungi in process waters used in various industrial applications. It is typically a 75 - 77% w/w aqueous solution of tetrakis (hydroxymethyl) phosphonium sulfate.

Published PCT application no. WO 99/33345 discloses synergistic biocidal compositions comprising "THP", a non-surfactant biopenetrant compatible with "THP" and optionally a surfactant. The term "THP" is defined in WO 99/33345 as meaning either a tetrakis(hydroxyalkyl)phosphonium salt or a tris(hydroxyalkyl)phosphine. To avoid confusion we shall hereinafter refer to these compounds as "THP salts" or "THP" respectively. Examples of non-surfactant biopenetrants disclosed in the WO 99/33345 include phosphonated derivatives of carboxylic acids, for example the phosphonated telomers disclosed in published European applications EP-A-0 491 391 and EP-A-0 861 846. Other non-surfactant biopenetrants disclosed in WO 99/33345 include a copolymer of N, N, N', N'-tetramethyl-1,2-diaminoethane with bis(2-chloroethyl)ether. This is commercially available under the trade name WSCP.

United States Patent Application Publication Nos. 2009/0186858 and 2018/0064112 to Talbot et al. disclose a synergistic composition comprising a THP salt and a biopenetrant, in which the biopenetrant comprises a polymer of an unsaturated carboxylic acid or a copolymer of an unsaturated carboxylic acid with a sulphonic acid, the polymer or copolymer being terminated by a mono- or diphosphonated unsaturated carboxylic acid group or having such monomers incorporated into the polymer backbone. This composition, where the biopenetrant is a phosphonic acid-tipped polymer or copolymer, acts synergistically with a THP salt to enhance the biocidal efficacy of the THP salt against both planktonic (free-swimming) and sessile (attached) bacteria, and also acts synergistically to enhance the efficacy of the THP salt in the dissolution of metal sulphide, especially iron sulphide scale.

### SUMMARY OF THE INVENTION

It would be desirable to provide a biocidal composition for enhancing the efficiency of THPS and providing a secondary effect in dissolution of FeS, which facilitates the process of separation of water and crude oil in the process of oil production.

It would be desirable to provide a biocidal composition achieving a comparable bio-efficiency with a lower THPS concentration than a biocidal composition of THPS alone, for example achieving a comparable bio-efficiency to a 75 wt.% THPS biocidal solution with a lower THPS concentration than the 75 wt.% THPS biocidal solution.

Quaternary ammonium cationic surfactant is a fast kill biocide.

A biopenetrant which comprises a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, generally provided as a polyanionic solution, is used to facilitate the penetration of THPS into the biofilm.

However, when THPS, this biopenetrant, and quaternary ammonium cationic surfactant are mixed they form a precipitate so they cannot be used all together in the same composition.

The invention is based on the unexpected discovery that including a selected amphoteric surfactant in a mixture comprising the THP salt, the biopenetrant and the quaternary ammonium cationic surfactant prevents the formation of precipitate. As a result of this discovery both the quaternary ammonium cationic surfactant and the biopenetrant can be mixed with THP salt to form a biocidal mixture when the biocidal mixture also includes the amphoteric surfactant.

Accordingly, the present invention provides a synergistic biocidal composition comprising:
a biocide comprising a tetrakis(hydroxyalkyl)phosphonium salt,
   wherein the salt is selected from the group consisting of sulphate, phosphite, bromide, fluoride, chloride, phosphate, carbonate, acetate, formate, citrate, borate, and silicate, preferably the sulphate salt known as THPS or the chloride salt known as THPC,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
at least one quaternary ammonium cationic surfactant, and
at least one amphoteric surfactant.

The salt(s) of the polymer or copolymer terminated by VPA or VDPA or incorporating VPA and/or VDPA into its backbone mean that the carboxylic acid and/or sulphonic acid repeating units of said polymer or copolymer can be in the form of salt(s), i.e; they can be alkali or alkaline earth metal salt(s) (e.g., sodium or potassium) or linear or branched C1-C4 alkyl esters.

Preferably the biopenetrant is a VDPA end-capped acrylic/vinylsulfonate copolymer having a weight average molecular weight in the range of 2000 - 15000 g/mol.

Typically the amphoteric surfactant is selected from at least one member of the group consisting of:
carboxybetaines,
alkyl betaines,
alkyl dimethyl betaines,
alkyl amido betaines,
alkyl amphoacetates,
alkyl amphodiacetates,
alkyl amphopropionates,
alkyl amphodipropionates,
alkyl amphocarboxypropionates,
alkyl iminopropionates,
alkyl iminodipropionates,
alkyl amphoglycinates,
alkyl amphocarboxy glycinates,
alkyl amphopropylsulfonates,
alkyl sultaines,
alkylamidopropylhydroxy sultaines,
sulfobetaines,
alkyl imidazolines,
alkylamine oxides, and
alkali metal (typically sodium or potassium), alkaline earth metal, ammonium or substituted ammonium salts of any of the above amphoteric surfactants, preferably ammonium, sodium or potassium salts thereof.

The invention provides a method of treating a water system contaminated, or liable to contamination, with microorganisms selected from at least one of bacteria, fungi or algae, using a method that disrupts microorganism activity, e.g. it may disrupt bacterial activity. Produced water (and other water systems) may have significant organic and/or hydrocarbon components to them. Thus, the present invention also relates to the treatment of systems containing or not containing hydrocarbons. For example, the method may treat water to be used for hydraulic fracturing (fracking) or secondary recovery of oil and gas reservoirs.

The method therefore prevents or reduces the detrimental effects from the presence of active microorganisms, such as bacteria and archaea.

The synergistic composition may be a synergistic biocidal composition and/or a synergistic metal sulphide (e.g. iron sulphide) dissolving composition.

For purposes of this description all percentages and ratios are by weight unless otherwise indicated and all average molecular weights are weight average molecular weight unless otherwise indicated. Also, for purposes of this description the term wet basis means a water inclusive basis and the term dry basis means a water free basis. Weight percent based on actives or active ingredients means based on the weight of active ingredients. For example, in a solution of a polymer and solvent the polymer is the active ingredient.

The invention also provides the use of a composition comprising:
a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of at least one quaternary ammonium cationic surfactant; and
at least one amphoteric surfactant;
for treating a water system contaminated, or liable to contamination, with microorganisms selected from at least one of bacteria, archaea, fungi and algae, thereby reducing population of the microorganisms by at least 90%.

In this use the composition may further comprise dissolving metal sulphide scale, preferably iron sulphide and/or schmoo.

In this use, reducing population of the microorganisms can be by at least 99% as determined by ATP testing.

It is preferable according to the invention that the water system treated is cooling water system and that the population of the microorganisms is reduced by at least 99% as determined by ASTM E645-18.

Another aspect of the present invention is the use of a composition comprising:
a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or
salt(s) of said polymer or copolymer being either terminated by vinylphosphonic acid (VPA) or vinylidene-1, 1-diphosphonic acid (VDPA) or
having vinylphosphonic acid (VPA) and/or vinylidene-1, 1-diphosphonic acid (VDPA) monomers incorporated into the polymer or copolymer backbone,
a biocidally active amount of at least one quaternary ammonium cationic surfactant, and
at least one amphoteric surfactant;
for treating a water system containing or in contact with a metal sulphide scale or schmoo, thereby dissolving at least part of the scale or schmoo.

In this use according to the invention, the scale is preferably iron sulphide scale.

**The** water system can be cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, textiles, leather and leather production system, or a system used therewith.

### DETAILED DESCRIPTION OF THE PREFERRED EMBODIMENTS

### 1. Compositions

**The** present invention provides a synergistic biocidal composition comprising:
a biocide, wherein the biocide comprises a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant, wherein the biopenetrant comprises a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having such VPA and/or VDPA monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone,
at least one quaternary ammonium cationic surfactant, and
at least one amphoteric surfactant.

Typically the amphoteric surfactant is selected from at least one member of the group consisting of:
carboxybetaines,
alkyl betaines,
alkyl dimethyl betaines,
alkyl amido betaines,
alkyl amphoacetates,
alkyl amphodiacetates,
alkyl amphopropionates,
alkyl amphodipropionates,
alkyl amphocarboxypropionates,
alkyl iminopropionates,
alkyl iminodipropionates,
alkyl amphoglycinates,
alkyl amphocarboxy glycinates,
alkyl amphopropylsulfonates,
alkyl sultaines,
alkylamidopropylhydroxy sultaines,
sulfobetaines,
alkyl imidazolines,
alkylamine oxides,
fatty acid amides formed from a fatty acid and an amine, and alkali metal (typically sodium or potassium), alkaline earth metal, ammonium or substituted ammonium salts of any of the above amphoteric surfactants, preferably ammonium, sodium or potassium salts thereof.

The compositions of the invention may include water due to water being added and/or due to water being used for as a carrier for an active ingredient, for instance when the active ingredient is added to the composition as an aqueous solution. In the compositions of the present invention, the typical wt. % ranges of the ingredients are as follows based on the total weight of the composition (this wt % is relative to the total weight of the composition including water, if any water is present).

The composition typically has 10 to 60 wt. % preferably 20 to 50 wt. % the tetrakis(hydroxyalkyl)phosphonium salt (THP salt) biocide, wherein the salt is selected from the group consisting of sulphate, phosphite, bromide, fluoride, chloride, phosphate, carbonate, acetate, formate, citrate, borate, and silicate. The THP salt may be added as a solution of active ingredient with water as an aqueous carrier, for example THPS 75 which is a solution of 75 wt. % THPS in an aqueous carrier. If the THP salt is added as a solution of active ingredient with water as an aqueous carrier the composition typically has 13 to 80 wt. % preferably 25 to 67 wt. % of this solution.

The composition typically has 0.5 to 10 wt. % preferably 1 to 5 wt. % or 1 to 4 wt. %, the biopenetrant active ingredient, namely 0.5 to 10 wt. % preferably 1 to 4 wt. % the polymer of an unsaturated carboxylic acid or a copolymer of an unsaturated carboxylic acid with an unsaturated sulphonic acid, or salts thereof, the polymer or copolymer being either terminated by vinylphosphonic acid (VPA) or vinylidene-1,1-diphosphonic acid (VDPA) or having vinylphosphonic acid (VPA) and/or vinylidene-1,1-diphosphonic acid (VDPA) monomers incorporated into the polymer or copolymer backbone. If the biopenetrant is added as a solution of active ingredient with water as an aqueous carrier the composition typically has 2.5 to 50 wt. %, preferably 5 to 20 wt. % biopenetrant solution.

The composition typically has 1 to 30 wt. %, preferably 2 to 10 wt. %, more preferably 3 to 6 wt. %, the quaternary ammonium cationic surfactant. If the quaternary ammonium cationic surfactant is added as a solution of active ingredient with water as an aqueous carrier the composition typically has 2 to 60 wt. %, preferably 4 to 20 wt. %, more preferably 6 to 12 wt. % quaternary ammonium cationic surfactant solution.

The composition typically has 1 to 25 wt. %, preferably 3 to 10 wt. %, more preferably 4 to 7 wt. %, the amphoteric surfactant. If the amphoteric surfactant is added as a solution of active ingredient with water as an aqueous carrier the composition typically has 3.5 to 90 wt.%, preferably 10 to 33.3 wt., more preferably 13.5 wt. % to 23.5 wt. % the amphoteric surfactant solution.

Preferably the total of THP salt and quaternary ammonium cationic surfactant is 20 to 60 wt. %, more preferably 25 to 50 wt. %, further more preferably 30 to 40 wt. % of the composition.

In the compositions of the present invention, when expressed as a percentage by weight of active ingredients, the preferred ratio of VPA or VDPA end-capped polymer or copolymer to THP salt is 0.5 to 10 wt. % VPA or VDPA end-capped polymer or copolymer: 10 to 60 wt. % THP salt. More preferably the ratio is 1 to 4 wt. % VPA or VDPA end-capped polymer or copolymer: 10 to 60 wt. % THP salt. Most preferably the ratio is 1 to 4 wt. % VPA or VDPA end-capped polymer or copolymer: 20 to 50 wt. % THP salt.

Except as indicated, the above weight percents are of active ingredients. For example, if the biopenetrant polymer is added as a solution, only the amount of the active ingredient in the solution is counted for the wt. %.

Optionally, the composition may further include 0.01 to 1 wt. %, preferably 0.05 to 0.5 wt. %, more preferably 0.10 to 0.25 wt. %, defoamer (anti-foaming agent).

Optionally, the composition may further include one or more additives such as chelating agents, acid corrosion inhibitors and amino acid stabilizers.

The balance, if any, is typically carrier such as water.

Typically the composition has 5 - 80 wt. %, more typically 30-70 wt. %, further typically 40-50 wt. %, active ingredients (this is the total THP salt, biopenetrant, quaternary ammonium cationic surfactant and amphoteric surfactant), and the remainder optional additives and carrier, preferably the carrier is water.

If desired there is an absence of sultaines, alcohol, glycols, ethers, glycerol, copolymer of N, N, N', N'-tetramethyl-1,2-diaminoethane with bis(2-chloroethyl)ether, known as WSCP, non-ionic surfactants, anionic surfactants, glutaraldehyde, oxazoilidine and / or acrolein.

### THP Salt Biocide

Preferably, the biocide is a THP salt which is tetrakis(hydroxymethyl)phosphonium sulphate (THPS), or tetrakis(hydroxymethyl) phosphonium chloride (THPC). Other THP salts include the phosphite, bromide, fluoride, phosphate, carbonate, acetate, formate, citrate, borate, and silicate which are also suitable biocides.

ADBAC (Alkyl Dimethyl Benzyl ammonium chloride) and other quaternary ammonium cationic surfactants of the invention are also biocides but in the present specification are labelled as quaternary ammonium cationic surfactants.

### Biopenetrant

The biopenetrant comprises a polymer of an unsaturated carboxylic acid or a copolymer of an unsaturated carboxylic acid with an unsaturated sulphonic acid, or salts thereof, the polymer or copolymer being either terminated by vinylphosphonic acid (VPA) monomer or vinylidene-1, 1-diphosphonic acid (VDPA) monomer or having such vinylphosphonic acid and/or vinylidene-1, 1-diphosphonic acid monomers incorporated into the polymer or copolymer backbone. For example, the biopenetrant may be a random copolymer incorporating vinylphosphonic acid and/or vinylidene-1, 1-diphosphonic acid monomers into the copolymer backbone.

The polymer or copolymer of the biopenetrant may be an acrylic polymer or an acrylic/vinylsulphonic copolymer being either terminated by vinylphosphonic acid (VPA) monomer or vinylidene-1, 1-diphosphonic acid (VDPA) monomer or having such vinylphosphonic acid and/or vinylidene-1, 1-diphosphonic acid monomers incorporated into the polymer or copolymer backbone. An acrylate is a salt of an acrylic acid. A sulfonate is a salt of sulfonic acid. Typical salt forms of acrylate and sulfonate are any one or more of alkali metals, for example, sodium salts and potassium salts, and esters. Typical esters are linear or branched C1-C4 alkyl esters, for example methyl or ethyl esters.

Acrylic acid monomeric units and/or acrylate monomeric units are both considered acrylic monomeric units. Thus, by acrylic polymer is meant a polymer or copolymer containing acrylic acid monomeric units and/or acrylate monomeric units. Thus, polyacrylic acid (PAA) and polyacrylate (PA) are both forms of acrylic polymer.

Vinylsulfonic acid monomeric units and/or vinylsulfonate monomeric units are both considered vinylsulphonic monomeric units. Thus, by acrylic/vinylsulphonic copolymer is meant a polymer or copolymer containing acrylic acid monomeric units and/or acrylate monomeric units as well as vinylsulphonic acid monomeric units and/or vinylsulphonate monomeric units. Thus, for example, the polymer or copolymer may be, respectively, a polyacrylate or an acrylate/vinylsulphonate copolymer.

The polymer or copolymer of the biopenetrant may be in the protonated or deprotonated form (meaning acid or salt form, respectively) depending upon pH of the composition in which it is contained or the water system it is treating. Typical water systems being treated have a pH of 3 to 6 or 3.5 to 5.5. The pH of the composition or system can affect the equilibrium balance between how much acid form vs. how much salt form is present. For example at pH of 2 - 4, the polymer or copolymer is likely in the acid form.

Thus, the biopenetrant may be one or more of:
A. an acrylic polymer terminated with vinylphosphonic acid (a "VPA end-capped polymer"), for example, a polyacrylic acid polymer terminated with VPA and/or a polyacrylate terminated with VPA;
B. an acrylic/vinylsulphonic copolymer terminated with vinylphosphonic acid (a "VPA end-capped polymer"), for example, an acrylic acid/vinylsulphonic acid copolymer terminated with VPA, an acrylic acid/vinylsulphonate copolymer terminated with VPA, an acrylate/vinylsulphonic acid copolymer terminated with VPA, and/or an acrylate/vinylsulphonate copolymer terminated with VPA;
C. an acrylic polymer terminated with vinylidene-1, 1-diphosphonic acid (a "VDPA end-capped polymer"), for example, a polyacrylic acid polymer terminated with VDPA and/or an polyacrylate terminated with VDPA;
D. an acrylic/vinylsulphonic copolymer terminated with vinylidene-1, 1-diphosphonic acid (a "VDPA end-capped polymer"), for example, an acrylic acid/vinylsulphonic acid copolymer terminated with VDPA, an acrylic acid/vinylsulphonate copolymer terminated with VDPA, an acrylate/vinylsulphonic acid copolymer terminated with VDPA, and/or an acrylate/vinylsulphonate copolymer terminated with VDPA,
E. an acrylic polymer incorporating VPA and/or VDPA monomers into the polymer backbone, for example, a polyacrylic acid polymer incorporating VPA and/or VDPA monomers into the polymer backbone and/or an polyacrylate incorporating VPA and/or VDPA monomers into the polymer backbone;
F. an acrylic/vinylsulphonic copolymer incorporating VPA and/or VDPA monomers into the copolymer backbone, for example an acrylic acid/vinylsulphonic acid copolymer incorporating VPA and/or VDPA monomers into the copolymer backbone, an acrylic acid/vinylsulphonate copolymer incorporating VPA and/or VDPA monomers into the copolymer backbone, an acrylate/vinylsulphonic acid copolymer incorporating VPA and/or VDPA monomers into the copolymer backbone, and/or an acrylate/vinylsulphonate copolymer incorporating VPA and/or VDPA monomers into the copolymer backbone.

Preferably the biopenetrant is acrylic/vinylsulfonate copolymer. Preferably the biopenetrant is VDPA end-capped copolymer. More preferably the biopenetrant is the VDPA end-capped acrylic/vinylsulphonate copolymer.

The acrylic polymer terminated with vinylphosphonic acid and the acrylic/vinylsulphonate copolymer terminated with vinylphosphonic acid are both hereinafter termed "VPA end-capped polymer". The VPA end-capped copolymer biopenetrant has a weight average molecular weight of 1000 to 15000 g/mol, typically 1000 to 12000 g/mol, for example, 3000 to 6000 g/mol, more typically in the range of 5000 to 6000 g/mol. The VPA end-capped polymer biopenetrant is typically a vinylphosphonic acid-terminated polyacrylate.

**The** acrylic polymer terminated with vinylidene-1, 1-diphosphonic acid and the acrylic/vinylsulphonate copolymer terminated with vinylidene-1, 1-diphosphonic acid are both hereinafter termed "VDPA end-capped polymer". The "VDPA end-capped polymer" biopenetrant has a weight average molecular weight of 1000 to 15000 g/mol, typically 1000 to 12000 g/mol, for example, 3000 to 6000 g/mol, more typically in the range of 5000 to 6000 g/mol. The VDPA end-capped polymer biopenetrant is typically an acrylate/vinylsulphonate copolymer terminated with vinylidene-1, 1-diphosphonic acid. Most typically the "VDPA end-capped copolymer" biopenetrant is a random copolymer of acrylic monomer and vinyl sulfonic monomer, preferably VSA (vinyl sulphonate) monomers and AA (acrylic acid) or acrylate monomers, with a VDPA endcap.

Formula (I) shows such a random copolymer of acrylic monomer and vinyl sulfonic monomer with a VPA end-cap or a VDPA endcap. 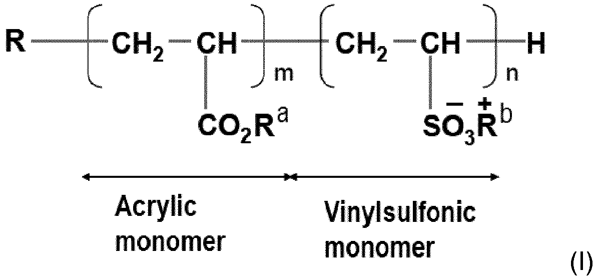 wherein R is a VPA or VDPA endcap, R^{a} is selected from the group of H, Na, K, and linear or branched C1-C4 alkyl, and R^{b} is selected from the group of H, Na, K, and linear or branched C1-C4 alkyl.

Formula (la) shows such a random copolymer of acrylic acid (AA) and vinyl sulphonate wherein R is a VPA or VDPA endcap.

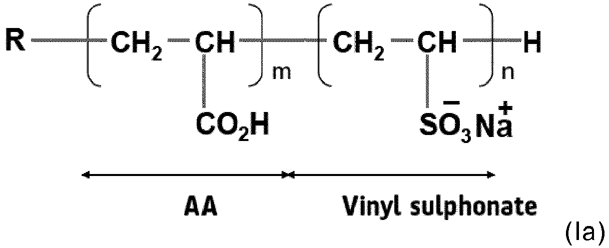

In the biopenetrant structures (I) and (la) if R is a vinylphosphonic acid monomer, namely the VPA end-cap, then the copolymer is a "VPA end-capped polymer". In the biopenetrant structures (I) and (la) if R is a vinylidene-1, 1-diphosphonic acid monomer, namely the VDPA end-cap, then the copolymer is a "VDPA end-capped polymer".

In biopenetrant structure (I) and (la) m and n are sufficient to achieve the above-described molecular weights for "VPA end-capped polymer" and "VDPA end-capped polymer".

In biopenetrant structure (I) the molar ratio of acrylic monomer to vinylsulfonic acid monomer is typically 20-80:80-20, preferably 30-70:70:30, more preferably about 40-60:60-40.

In biopenetrant structure (la) the molar ratio of VSA (vinyl sulphonate monomer) to AA (acrylic acid monomer) is typically 20-80:80-20, preferably 30-70:70:30, more preferably about 40-60:60-40. This ratio also applies if the acrylate monomer is present rather than AA.

The acrylic polymer or acrylic/vinylsulphonic copolymer biopenetrant incorporating VPA and/or VDPA monomers has a weight average molecular weight of 1000 to 15000 g/mol, typically 1000 to 12000 g/mol, for example, 3000 to 6000 g/mol, more typically in the range of 5000 to 6000 g/mol. Typically the acrylic polymer acrylic/vinylsulphonic copolymer biopenetrant incorporating VPA and/or VDPA monomers is an acrylic/vinylsulphonate copolymer incorporating the VPA and/or VDPA monomers.

### Quaternary Ammonium Cationic Surfactant

Quaternary ammonium cationic surfactants are generally known and include for example, mono-cationic surfactants according to formula (II): 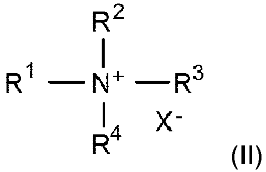 wherein:
R¹, R², R³, and R⁴ are each independently an organic group; preferably R¹ and R² are an aryl or alkaryl group (typically benzyl) or C₈ to C₃₀ alkyl group; preferably R³ and R⁴ are an aryl or alkaryl group (typically benzyl) or a C₁ to C₃₀ alkyl group, more preferably a C₁ to C₁₆ alkyl group; and
X⁻ is an anion, typically a chloride, bromide, methosulfate, ethosulfate, lactate, saccharinate, acetate or phosphate anion.

More preferably, R¹ is a C₈-C₁₈ alkyl group, an aryl group, or an alkaryl group of an aryl group and a C₁-C₄ alkene group (typically the alkaryl is benzyl); R² is C₈-C₁₈ alkyl; R³ is C₁-C₄ alkyl; and R⁴ is C₁-C₄ alkyl.

Examples of suitable quaternary ammonium cationic surfactant compounds of the monoalkyl amine derivative type include: cetyl trimethyl ammonium bromide (also known as CETAB or cetrimonium bromide), cetyl trimethyl ammonium chloride (also known as cetrimonium chloride), myristyl trimethyl ammonium bromide (also known as myrtrimonium bromide or Quaternium-13), stearyl dimethyl benzyl ammonium chloride (also known as stearalkonium chloride), oleyl dimethyl benzyl ammonium chloride, (also known as olealkonium chloride), lauryl/myristryl trimethyl ammonium methosulfate (also known as cocotrimonium methosulfate), cetyl dimethyl (2)hydroxyethyl ammonium dihydrogen phosphate (also known as hydroxyethyl cetyldimonium phosphate), cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride and behenamidopropyl ethyl dimonium ethosulfate. Mixtures may also be used in the present invention.

Quaternary ammonium compounds of the dialkyl amine derivative type include, for example, distearyldimonium chloride, dicetyl dimonium chloride, stearyl octyldimonium methosulfate, dihydrogenated palmoylethyl hydroxyethylmonium methosulfate, dipalmitoylethyl hydroxyethylmonium methosulfate, dioleoylethyl hydroxyethylmonium methosulfate, hydroxypropyl bisstearyldimonium chloride, and mixtures thereof.

Typical quaternary ammonium cationic surfactants comprise branched and/or unsaturated cationic surfactants such as olealkonium chloride, long chain cationic surfactants such as stearalkonium chloride and behentrimonium chloride, as well as mixtures thereof.

Suitable anionic counterions for the quaternary ammonium cationic surfactant include, for example, chloride, bromide, methosulfate, ethosulfate, lactate, saccharinate, acetate and phosphate anions.

The quaternary ammonium cationic surfactant may for example be a dodecyl trimethyl ammonium salt.

The quaternary ammonium cationic surfactant may for example be Benzalkonium salts having one 8 to 20 C alkyl group and two 1 to 4 carbon alkyl groups linked to its quaternary nitrogen atom, and a benzyl group. A preferred Benzalkonium salt is Benzalkonium chloride, also known as BZK, BKC, BAC, alkyldimethylbenzylammonium chloride or ADBAC, is a type of cationic surfactant. It is an organic salt classified as a quaternary ammonium compound. In industry it has three main categories of use: as a biocide, a cationic surfactant, and as a phase transfer agent. ADBACs are a mixture of alkylbenzyldimethylammonium chlorides, in which the alkyl group has various even-numbered alkyl chain lengths as seen in Formula (III). 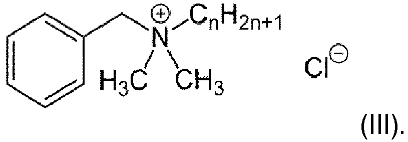 wherein n= 8, 10, 12, 14, 16, 18, for example it may use C₁₂ (70%) and C₁₄ (30%) as alkyl chain.

Preferred quaternary ammonium cationic surfactants are ADBAC (Alkyl Dimethyl Benzyl Ammonium Chloride) and/or DDAC (didecyldimethyl ammonium chloride).

The invention may have an absence of N-alkyl pyridinium, alkyl imidazoline or quaternized imidazoline salts, amido amines such as those formed by reacting a fatty acid having 2 to 22 carbon atoms or an ester, glyceride or similar amide forming derivative thereof, with a di or poly amine, such as, for example, ethylene diamine or diethylene triamine, in such a proportion as to leave at least one free amine group, quaternized amido amines, and alkyl phosphonium and hydroxyalkyl phosphonium salts having one C₈-₂₀ alkyl group and three C₁₋₆ alkyl or hydroxyalkyl groups.

### Amphoteric Surfactants

The invention may use any water soluble amphoteric surfactant compound which comprises a hydrophobic portion including C₈-C₂₀ alkyl or alkenyl group. Suitable amphoteric surfactants include for example, derivatives of aliphatic secondary and tertiary amines in which the aliphatic radical can be straight chain or branched and wherein one of the aliphatic substituents contains from 8 to 20 carbon atoms and one contains an anionic water-solubilizing group as well as mixtures thereof.

Typically, the amphoteric surfactants comprise derivatives of aliphatic secondary and tertiary amines in which the aliphatic radical is straight chain or branched and wherein one of the aliphatic substituents contains from 8 to 20 carbon atoms and one contains an anionic water-solubilizing group, as well as mixtures thereof.

For purposes of this application amphoteric surfactants include true amphoteric entities comprising an ionic group and a potentially ionic group of opposite charge, or zwitterionic entities simultaneously comprising two opposite charges. A true amphoteric entity is a class of surfactant that has both a positively charged moiety and a negatively charged moiety over a certain pH range (e.g. typically slightly acidic), only a negatively charged moiety over a certain pH range (e.g. typically slightly alkaline) and only a positively charged moiety at a different pH range (e.g. typically moderately acidic). A zwitterionic entity has a permanent, positively charged moiety in the molecule regardless of pH and a negatively charged moiety at alkaline pH. The term "amphoteric surfactant" as utilized herein encompasses one or more amphoteric surfactants such as mixtures of amphoteric surfactants.

The amphoteric surfactants can be any one or more of the following:
carboxybetaines of the formula: R₃N⁺CH₂COO⁻, wherein each R is an alkyl, cycloalkyl, alkenyl or alkaryl group and preferably at least one, and most preferably not more than one R, has an average of from 8 to 20, preferably, 10 to 18 aliphatic carbon atoms and each other R has an average of from 1 to 4 carbon atoms,
alkyl betaines, wherein alkyl represents an alkyl group having 8 to 20 carbon atoms, more typically wherein alkyl represents an alkyl group having 12 to 18 carbon atoms, for example lauryl betaine or octyl betaine or coco alkyldimethyl betaine, also known as coco betaine;
alkyl dimethyl betaine surfactants, wherein alkyl represents an alkyl group having 8 to 20 carbon atoms, more typically wherein alkyl represents an alkyl group having 12 to 18 carbon atoms;
alkyl amido betaines, typically alkyl amidopropyl betaines, wherein alkyl represents an alkyl group having 8 to 20 carbon atoms, more typically wherein alkyl represents an alkyl group having 12 to 18 carbon atoms, such as cocamidopropyl betaine (CAPB);
alkyl amphoacetates and alkyl amphodiacetates, wherein alkyl represents an alkyl group having 8 to 20 carbon atoms, more typically wherein alkyl represents an alkyl group having 12 to 18 carbon atoms, such as, for example, comprising a cocoyl or lauryl chain;
alkyl amphopropionates or alkyl amphodipropionates, wherein alkyl represents an alkyl group having 8 to 20 carbon atoms, more typically wherein alkyl represents an alkyl group having 12 to 18 carbon atoms;
alkyl amphocarboxypropionates, wherein alkyl represents an alkyl group having 8 to 20 carbon atoms, more typically wherein alkyl represents an alkyl group having 12 to 18 carbon atoms,
alkyl iminopropionates, alkyl iminodipropionates, wherein alkyl represents an alkyl group having 8 to 20 carbon atoms, more typically wherein alkyl represents an alkyl group having 12 to 18 carbon atoms,
alkyl amphoglycinates, alkyl amphocarboxy glycinates, wherein alkyl represents an alkyl group having 8 to 20 carbon atoms, more typically wherein alkyl represents an alkyl group having 12 to 18 carbon atoms, and
alkyl amphopropylsulfonates, wherein alkyl represents an alkyl group having 8 to 20 carbon atoms, more typically wherein alkyl represents an alkyl group having 12 to 18 carbon atoms,
alkyl sultaines and alkyl amphohydroxypropyl sultaines, wherein alkyl represents an alkyl group having 8 to 20 carbon atoms, more typically wherein alkyl represents an alkyl group having 12 to 18 carbon atoms such as, an alkyl amphohydroxypropyl sultaine, sodium coco amphohydroxypropyl sulfonate, or cocamidopropyl hydroxysultaine ;
sulfobetaines, such as dimethylsulfinioacetate;
alkyl imidazolines, wherein alkyl represents an alkyl group having 8 to 20 carbon atoms, more typically wherein alkyl represents an alkyl group having 12 to 18 carbon atoms
alkylamine oxides, wherein alkyl represents an alkyl group having 8 to 20 carbon atoms, more typically wherein alkyl represents an alkyl group having 12 to 18 carbon atoms, for example lauramine oxide; and
the alkali metal (typically sodium or potassium), alkaline earth metal, ammonium or substituted ammonium salts of any of the above amphoteric surfactants, preferably ammonium, sodium or potassium salts thereof.

Typical amphoteric surfactants for use in the present invention include any one or more of the following:
alkyl betaines, wherein alkyl represents an alkyl group having 8 to 20 carbon atoms, more typically wherein alkyl represents an alkyl group having 12 to 18 carbon atoms, for example lauryl betaine or octyl betaine or coco alkyldimethyl betaine, also known as coco betaine;
alkyl dimethyl betaine surfactants, wherein alkyl represents an alkyl group having 8 to 20 carbon atoms, more typically wherein alkyl represents an alkyl group having 12 to 18 carbon atoms;
alkyl amido betaines, typically alkyl amidopropyl betaines, wherein alkyl represents an alkyl group having 8 to 20 carbon atoms, more typically wherein alkyl represents an alkyl group having 12 to 18 carbon atoms, such as cocamidopropyl betaine;
alkyl amphoacetates, alkyl amphodiacetates, wherein alkyl represents an alkyl group having 8 to 20 carbon atoms, more typically wherein alkyl represents an alkyl group having 12 to 18 carbon atoms,
alkyl amphopropionates, alkyl amphodipropionates, wherein alkyl represents an alkyl group having 8 to 20 carbon atoms, more typically wherein alkyl represents an alkyl group having 12 to 18 carbon atoms,
alkyl amphocarboxypropionates, wherein alkyl represents an alkyl group having 8 to 20 carbon atoms, more typically wherein alkyl represents an alkyl group having 12 to 18 carbon atoms,
alkyl iminopropionates, alkyl iminodipropionates, wherein alkyl represents an alkyl group having 8 to 20 carbon atoms, more typically wherein alkyl represents an alkyl group having 12 to 18 carbon atoms,
alkyl amphoglycinates, alkyl amphocarboxy glycinates, wherein alkyl represents an alkyl group having 8 to 20 carbon atoms, more typically wherein alkyl represents an alkyl group having 12 to 18 carbon atoms,
alkyl amphopropylsulfonates, wherein alkyl represents an alkyl group having 8 to 20 carbon atoms, more typically wherein alkyl represents an alkyl group having 12 to 18 carbon atoms; and
the alkali metal (typically sodium or potassium), alkaline earth metal, ammonium or substituted ammonium salts of any of the above amphoteric surfactants, preferably ammonium, sodium or potassium salts thereof.

Preferred amphoteric surfactants are any one or more of alkyl betaines, alkyl dimethyl betaine surfactants, alkyl amido betaines, alkyl amphoacetates, alkyl amphodiacetates, alkyl amphopropionates or alkyl amphodipropionates; and the alkali metal (typically sodium or potassium), alkaline earth metal, ammonium or substituted ammonium salts of any of the above amphoteric surfactants, preferably ammonium, sodium or potassium salts thereof.

The most preferred amphoteric surfactants are any one or more of cocamidopropyl betaine, coco-betaine, and/or sodium lauroampho acetate.

Typical carboxybetaines surfactants are betaines of the formula: R₃N⁺CH₂COO⁻, wherein each R is an alkyl, cycloalkyl, alkenyl or alkaryl group and preferably at least one, and most preferably not more than one R, has an average of from 8 to 20, e.g. 10 to 18 aliphatic carbon atoms and each other R has an average of from 1 to 4 carbon atoms. Preferably R is alkyl.

Typical carboxybetaines include lauryl bis-(2-hydroxypropyl)alpha-carboxyethyl betaine.

Typical alkyl betaines have the structure of formula (IV) 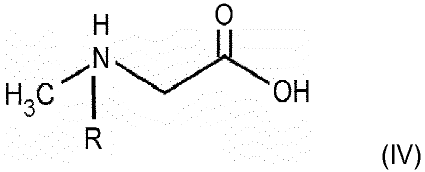 wherein R represents an alkyl group having 8 to 20 carbon atoms, more typically wherein R represents an alkyl group having 12 to 18 carbon atoms. For cocobetaine R is a cocoyl group having an alkyl group having 12 carbon atoms.

Typical alkyl betaine surfactants include lauryl dimethyl betaine, and cocoamidopropyl betaine, decyl dimethyl betaine, undecyl dimethyl betaine, dodecyl dimethyl betaine, tridecyl dimethyl betaine, tetradecyl dimethyl betaine, coco dimethyl betaine, hexadecyl dimethyl betaine, heptadecyl dimethyl betaine, octadecyl dimethyl betaine, lauryl dihydroxypropyl glycinate, lauryl di(hydroxy-poly(ethoxy)) glycinate, lauryl bis-(2-hydroxy-ethyl)carboxy methyl betaine, stearyl bis-(2-hydroxypropyl)carboxymethyl betaine, cocodimethyl sulfopropyl betaine, stearyldimethyl sulfopropyl betaine, lauryl dimethyl sulfoethyl betaine, lauryl bis-(2-hydroxy-ethyl)sulfopropyl betaine, and mixtures thereof.

Typical alkyl dimethyl betaine surfactants include cocodimethyl carboxymethyl betaine, lauryl dimethyl carboxymethyl betaine, lauryl dimethyl alpha-carboxy-ethyl betaine, cetyl dimethyl carboxymethyl betaine, oleyl dimethyl gamma-carboxypropyl betaine.

Typical amidopropyl betaines include alkyl amidopropyl betaines, wherein alkyl represents an alkyl group having 8 to 20 carbon atoms, more typically wherein alkyl represents an alkyl group having 12 to 18 carbon atoms. Typical alkyl amidopropyl betaines have the structure of formula (V): 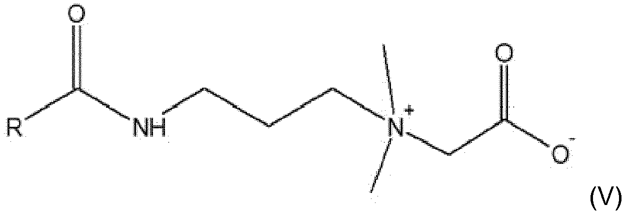 wherein R represents an alkyl group having 8 to 20 carbon atoms, more typically wherein R represents an alkyl group having 12 to 18 carbon atoms.

A typical alkyl amidopropyl betaine is, for example, dodecylamidopropyl dimethyl betaine, cocoamidopropyl dimethyl betaine, oleylamidopropyl betaine, or cocamidopropyl betaine. Cocamidopropyl betaine (CAPB) is a mixture of closely related organic compounds derived from coconut oil and dimethylaminopropylamine. CAPB is available as a viscous pale yellow solution and it is used as a surfactant in personal care products. The name reflects that the major part of the molecule, the lauric acid group having a 12-carbon alkyl chain, is derived from coconut oil. Lauramidopropyl betaine, the major component of cocamidopropyl betaine has the structure of formula (VI):

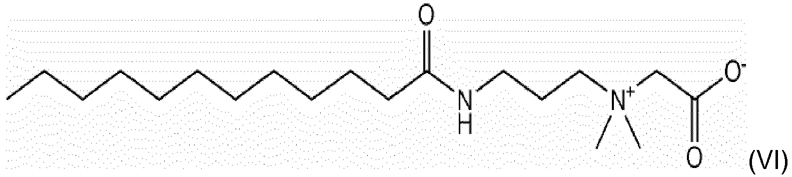

Typical alkylamphoacetate or alkylamphodiacetate amphoteric surfactants include cocoamphoacetate, cocoamphodiacetate, lauroamphoacetate, lauroamphodiacetate, lauroamphodiacetate, caproamphoacetate, caproamphodiacetate, and stearoamphoacetate. Specific examples of suitable amphoteric surfactant include ammonium, sodium or potassium salts thereof, for example, sodium lauroamphoacetate, sodium lauroamphopropionate, disodium lauroamphodiacetate, sodium cocoamphoacetate, or disodium cocoamphodiacetate, or a mixture thereof. A preferred alkylamphoacetate amphoteric surfactant for use is cocoamphoacetate.

Typical alkylamphopropionate amphoteric surfactants, for example, are cocoamphopropionate, lauroamphodipropionate, caproamphodipropionate, or a mixture thereof.

A typical alkyl amphopropylsulfonate amphoteric surfactant is coco amphopropylsulfonate.

Typical amphoteric surfactants are the quaternary imidazoline betaines of the formula (VII): 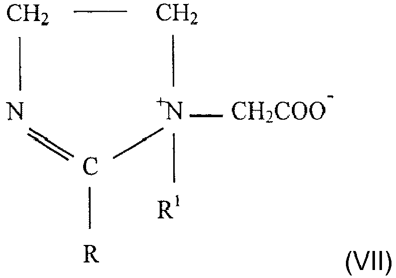 wherein R and R' are alkyl, alkenyl, cycloalkyl, alkaryl or alkanol groups having an average of from 1 to 20 aliphatic carbon atoms and R preferably has an average of from 8 to 20, e.g. 10 to 18 aliphatic carbon atoms and R' preferably has 1 to 4 carbon atoms. Other amphoteric surfactants for use according to our invention include alkyl amine ether sulphates, sulphobetaines and other quaternary amine or quaternized imidazoline sulphonic acids and their salts.

Other typical amphoteric surfactants include N-alkyl taurines, carboxylated amido amines such as RCONH(CH₂)₂N⁺ (CH₂CH₂CH₃)₂CH₂CO⁻₂, and amino acids having, in each case, hydrocarbon groups capable of conferring surfactant properties (e.g. alkyl, cycloalkyl alkenyl or alkaryl groups having from 8 to 20 aliphatic carbon atoms). Typical examples include 2-tallow alkyl, 1-tallow amido alkyl, 1-carboxymethyl imidazoline and 2-coconut alkyl N-carboxymethyl 2 (hydroxyalkyl) imidazoline.

However, there can be an absence of one or more amphoteric surfactants which are taurines, sultaines, sulfobetaines, imidazolines, and/or amine oxides.

### Solvents

Organic solvents are optional but may be used in, for example, winterized formulations. Typical formulations will include water. The winterized formulations typically include, instead of water or in addition to water, organic solvents such as methanol, isopropanol, ethanol, ethylene glycol, sorbitols, other glycols, ethylene glycol monobutyl ether (EGMBE), and combinations thereof.

### Anti-foaminq Agents

The use of surfactants may lead to foaming issues for the composition. To overcome this issue a defoaming or foam control agent may be added. A typical defoaming agent is a silicone-based antifoaming agent. Typical foaming agent dosage ranges from 0.01 to 1 %, typically 0.05% to 0.5, or 0.10% to 0.25%, based on wt. of the composition.

### Forms of the composition

The composition may, in one embodiment, be provided in the form of a solution, for example an aqueous solution.

Alternatively the composition may be supplied as a solid, for example a solid formed by coating the components onto, or absorbing the components into, a powdery granular or porous acid substrate such as adipic acid or by incorporation into a waxy substrate.

As noted above, the compositions according to the present invention may be used as biocides against planktonic (free-swimming) bacteria, sessile (attached) bacteria, general heterotrophic bacteria, acid producing bacteria, sulphate reducing bacteria and archaea.

### Methods of using the composition/Uses according to the invention

The invention provides a method of treating a water system contaminated, or liable to contamination, with microorganisms selected from at least one of bacteria, archaea, fungi or algae, which method comprises adding to the system separately or together,
a biocidally active amount of a biocide comprising a tetrakis(hydroxyalkyl)phosphonium salt (THP salt), wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of at least one quaternary ammonium cationic surfactant: and
at least one amphoteric surfactant;
thereby reducing population of the microorganisms by at least 90%.

In other words, the invention provides the use of the above defined composition for treating a water system contaminated, or liable to contamination, with microorganisms selected from at least one of bacteria, archaea, fungi or algae, thereby reducing population of the microorganisms by at least 90%.

The ingredients used in the method/use being any of the above described ingredients of the compositions of the present invention.

ATP testing is performed to determine the microorganism population. Adenosine triphosphate (ATP) molecule is in all living cells. In the presence of luciferin substrate and luciferase enzyme, ATP dependent oxidation of luciferin produces oxyluciferin, CO2, AMP, inorganic phosphate and light. The quantity of generated light is proportional to the amount of ATP present, thus, the light units can be measured to estimate the biomass of cells in a sample. ATP tests allow simple and rapid measurement of all kind of the microbiological organisms in the sample with reproducible results. ATP content of the cells is related to the homeostatic regulation and thus relatively constant in living cells. When a cell died intracellular ATP is reduced by ATPases and ATP levels are decreased quickly. Biocide efficacy is assessed by determination of total ATP and free ATP concentrations in both biofilm and bulk water samples using ATP bioluminescence swabs. Total ATP tests measure both the ATP that is bound up within living cells as well as ATP that is floating free in the water. Free ATP tests measure only the ATP floating free outside of living cells. The microbial ATP concentration is determined by the difference between total and free ATP. Monitoring of total and free ATP levels during biocidal treatment is employed to indicate the efficiency of the clean-up effort and help determine the appropriate scheduling to maximize the biocidal activity.

In the ATP test microorganism concentration is based on concentration of ATP/mL which is converted from relative light units. To measure the amount of ATP in a sample containing viable cells, the cells are first ruptured by addition of a lysing agent. This releases all the contents, including ATP, into solution. Additional reagents (luciferin and luciferase) are added to the solution and the amount of light produced is measured in a luminometer. The luminometer displays the number of Relative Light Units (RLUs) for that solution. Microorganisms found on surfaces need to be scrapped or swabbed off those surfaces and then treated in a similar fashion as the solution sample. The RLUs determined for a sample are relative to the mass of the cells in that tested sample rather than the number of cells per ml.

The ATP test uses cATP (cellular ATP) indicator, which isolates the living biomass and in turn provides accuracy in detecting total living biomass concentration. A typical ATP testing kit is available from LuminUltra.

To determine the percentage of reduction of the population of microorganisms in the water system contaminated, or liable to contamination, a first sample of the water system is collected before treatment with the synergistic biocide composition according to the invention and the corresponding microorganisms population is quantified using ATP test, providing a first result F0 in Relative Light Units (RLUs), then another sample of the water system is collected after treatment with the synergistic biocide composition according to the invention and the corresponding microorganisms population is quantified using ATP test, providing a second result F1 in Relative Light Units (RLUs). The percentage of reduction of the population of microorganisms is calculated according to the following equation: (F0-F1)/100. Also, typically a control (untreated sample) is grown alongside the treated sample. That way all of the growth times, temperatures, and variables are the same. Typically sampling is done at 1 hour, 3 hours and 24 hours, and 1 week.

The water system may or may not contain hydrocarbons. Produced water (and other water systems) may have significant organic and/or hydrocarbon components to them. However, the liquid of the water systems being treated is predominantly water. Thus, the liquid is over 50 wt. % water, more typically over 80 wt. % water, further more typically over 95 wt. % water.

The biocidally active amount will be dependent on the amount of microorganism, e.g., bacteria, type of microorganism, e.g., bacteria, water type (salinity, pH, temperature, etc.).

The term biocidally active amount of a THP salt means that there is sufficient THP salt to reduce the population of (kill) at least some microorganisms, e.g., bacteria, not only in the presence of the ammonium quaternary cationic surfactant but even in the absence of ammonium quaternary cationic surfactant.

The term biocidally active amount of an ammonium quaternary cationic surfactant means that there is sufficient ammonium quaternary cationic surfactant to reduce the population of (kill) at least some microorganisms, e.g., bacteria, not only in the presence of the THP salt but even in the absence of THP salt.

For the THP salt the biocidally effective amount will typically be 5-30 ppm if dosed as a continuous injection. In a batch treatment, the biocidally effective amount will typically be 50 - 100 ppm. However, in hydraulic fracking the dose of the THP salt biocide is typically 125 - 250 ppm.

For the ammonium quaternary cationic surfactant the biocidally effective amount will typically be 1-15 ppm (average is 5-8 ppm). For example, dosing 0.25 gpt (gallons per thousand gallons) of a 5 wt. % (active ingredient) ammonium quaternary cationic surfactant, typically results in a dose in the water treatment system of about 12.5 ppm).

The amount (dosage) of total composition of the present invention delivered to the water system to treat the water system in the field will depend on the quality of the system to be treated. However, in general the total dosage of the THP salt, biopenetrant, quaternary ammonium cationic surfactant and amphoteric surfactant in the water system ranges from 10 to 100 ppm, preferably 25 to 100 ppm. Typically this dosage contains at least 5 ppm, preferably at least 10 ppm, THP salt. Typically this dosage contains at least 1 ppm, preferably at least 2 ppm, quaternary ammonium cationic surfactant.

The total amount of THP salt and the ammonium quaternary cationic surfactant is preferably sufficient for reducing the microorganism, e.g., bacteria, population by at least 90%, more preferably by at least 99%, for example at least 99.9% or 99.99% of the microorganisms. The reduction can be within any suitable time after administering the dosage, for example, within 1 hour, 3 hours, 24 hours, or 1 week after administering the dosage. However, preferably the reduction is achieved within 24 hours after administering the dosage. If the dosage is administered as a single dose then this % reduction is preferably within 24 hours after administering the single dose. If the dosage is administered by multiple administrations then this % reduction is preferably the reduction achieved within 24 hours after administering the last portion of the dose. The 90% reduction is also known as a 1-log reduction in the microorganism count. The 99.99% reduction is also known as a 4 log reduction in the microorganism count. The reduction in the microorganisms population count can be detected by any analytical method (ATP, MPN, qPCR, etc.) that can measure microorganism count in the water system being tested. The ATP test described above is the adenosine triphosphate test which is a bioluminescence test using bacterial produced ATP. The MPN test is the Most Probable Number test which is a microorganism counting method based on serial dilution and bug bottles and/or petri dish plating methods, and qualitative (sometimes real time -RT). The qPCR test is the Polymerase Chain Reaction test which is a genetic based method to identify specific genetic sequences present in a sample. However, for the present invention the standard test to measure microorganism population is the above-described ATP test.

For cooling water systems reduction in microorganism population by the invention is determinable according to ASTM E645-18 Standard Practice for Evaluation of Microbicides Used in Cooling Water Systems which states, "The investigator will determine the minimal microbiocide threshold concentration for effectiveness based on customer requirements or specific registration needs. In most cases, a 90% kill or 1-log reduction would be the minimum level of performance." More preferably the reduction is by at least 99%, for example at least 99.9% or 99.99% of the microorganisms. ASTM E1839-13 Standard Test Method for Efficacy of Slimicides for the Paper Industry-Bacterial and Fungal Slime recommends a 2 log reduction, or 99%.

Typically the amphoteric surfactant is selected from at least one member of the group consisting of:
carboxybetaines,
alkyl betaines,
alkyl dimethyl betaines,
alkyl amido betaines,
alkyl amphoacetates,
alkyl amphodiacetates,
alkyl amphopropionates,
alkyl amphodipropionates,
alkyl amphocarboxypropionates,
alkyl iminopropionates,
alkyl iminodipropionates,
alkyl amphoglycinates,
alkyl amphocarboxy glycinates,
alkyl amphopropylsulfonates,
alkyl sultaines,
alkylamidopropylhydroxy sultaines,
sulfobetaines,
alkyl imidazolines,
alkylamine oxides, and
alkali metal (typically sodium or potassium), alkaline earth metal, ammonium or substituted ammonium salts of any of the above amphoteric surfactants, preferably ammonium, sodium or potassium salts thereof;

The invention therefore also provides a method of treating a water system contaminated, or liable to contamination, with microorganisms such as at least one of bacteria, archaea, fungi or algae, which method comprises adding to said system separately or together the ingredients of compositions of the present invention. If the ingredients are added to the water system separately they are added close enough in time to form the compositions of the present invention in situ in the water system, thereby killing, or controlling the activity of, at least some of said microorganisms. The invention therefore also provides a method of treating a water system against planktonic (free-swimming) and/or sessile (attached) bacteria or archaea. The method of treating may kill, or control the activity of, at least some general heterotrophic bacteria, acid producing bacteria, sulphate reducing bacteria or archaea in water. The invention therefore also provides the use of the above compositions according to the invention for treating a water system against planktonic (free-swimming) and/or sessile (attached) bacteria or archaea. The treatment may kill, or control the activity of, at least some general heterotrophic bacteria, acid producing bacteria, sulphate reducing bacteria or archaea in water.

The water system may, for instance, be contaminated with bacterial slime and/or planktonic bacteria. The invention may be of use for treating aerobic systems such as cooling towers, paper processing systems and waste water systems. The invention may also be suitable for use in anaerobic systems, such as oil wells, oil processing and injection systems e.g. during secondary recovery, and the transportation and storage of oilfield waters and crude oil. The invention may also be suitable for use in the preservation of slurries and functional fluids, such as drilling muds, completion fluids, stimulation fluids and fracturing fluids.

The invention also provides a method of treating a water system containing or in contact with a metal sulphide (typically metal sulphide scale), or schmoo containing metal sulphides which method comprises adding to the system separately or together,
a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of at least one ammonium quaternary cationic surfactant; and
at least one amphoteric surfactant;
thereby dissolving at least part of the scale or schmoo.

The invention also provides the use of the above composition for treating a water system containing or in contact with a metal sulphide (typically metal sulphide scale), or schmoo containing metal sulphides, thereby dissolving at least part of the scale or schmoo.

Schmoo is a solid phase consisting of hydrocarbons and mineral scale and at least 5% iron sulphide. It is a slimy, oily material, composed mainly by crude solids stabilized by FeS. It comprises FeS particles surrounded by an organic/hydrocarbon substance.

Typically the amphoteric surfactant is selected from at least one member of the group consisting of:
carboxybetaines,
alkyl betaines,
alkyl dimethyl betaines,
alkyl amido betaines,
alkyl amphoacetates,
alkyl amphodiacetates,
alkyl amphopropionates,
alkyl amphodipropionates,
alkyl amphocarboxypropionates,
alkyl iminopropionates,
alkyl iminodipropionates,
alkyl amphoglycinates,
alkyl amphocarboxy glycinates,
alkyl amphopropylsulfonates,
alkyl sultaines,
alkylamidopropylhydroxy sultaines,
sulfobetaines,
alkyl imidazolines,
alkylamine oxides, and
alkali metal (typically sodium or potassium), alkaline earth metal, ammonium or substituted ammonium salts of any of the above amphoteric surfactants, preferably ammonium, sodium or potassium salts thereof.

As mentioned above, the compositions according to the present invention may also be used to dissolve metal sulphides, preferably iron sulphide; in particular they may be used to dissolve iron sulphide scale. However, the metal sulphide may be lead sulphide or zinc sulphide or a combination of iron or lead and zinc sulphides, or be present within a schmoo organic matrix. The iron sulphide may typically be Mackinawite, Greigite (Fe₃S₄) troilite (FeS) or pyrite (FeS₂), but any iron sulphide species can be dissolved using the invention.

The amount of composition of the present invention delivered to the water system is such to treat the water system with the sum of the total of THP salt, biopenetrant polymer or copolymer, quaternary ammonium cationic surfactant and amphoteric surfactant dosage of this formulation in the field will depend on the quality of the system to be treated but in general ranges from 10 to 100 ppm, preferably 25 to 100 ppm. Typically this dosage contains at least 1 ppm, preferably at least 2 ppm, quaternary ammonium cationic surfactant. Typically this dosage contains at least 5 ppm, preferably at least 10 ppm, THP salt.

The invention thus also provides a method of treating a water system containing or in contact with a metal sulphide scale, for example an iron sulphide scale, which method comprises adding to the system separately or together the ingredients of any of the compositions of the present invention thereby dissolving at least part of the scale. If applied separately the ingredients are applied near enough in time to form the mixture of a composition of the present invention in situ in the water system.

The invention may be of use in the oil and gas industry, for treating systems such as oil wells, gas wells, injection, reinjection or disposal wells, pipelines, storage vessels and production equipment, e.g. during secondary recovery, and in other industrial water systems, for instance in paper industry systems.

Typically, the invention may be of use in oil and gas production and extraction which comprises injection and produced water, source water and aquifer water for waterflooding and hydraulic fracturing, pond water, holding tank water, functional fluids, drilling muds, completion and workover fluids, hydrotest fluids, stimulation fluids, packer fluids, fracturing fluids, oil and gas wells, separation, storage and transportation systems, oil and gas pipelines, oil and gas vessels, or fuel.

The invention may be of use in water systems for cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, textiles, leather and leather production system, or a system used therewith.

### EXAMPLES

The present invention will be illustrated by way of the following examples.

In the examples, the various abbreviations have the following meaning.

THPS or THPS 75: 75% aqueous solution of tetrakis(hydroxymethyl)phosphonium sulphate.

Ammonium quaternary cationic surfactant: alkyldimethylbenzylammonium chloride (ADBAC), with the alkyl groups being C12 (about 70%) and C14 (about 30%).

VPA polymer: a vinylphosphonic acid-terminated acrylic polymer of weight average molecular weight about 4000 g/mol.

VDPA copolymer: a vinylidene-diphosphonic acid-terminated acrylic/vinylsulphonate copolymer of weight average molecular weight 5000 - 6000 g/mol. In particular the anionic copolymer of the examples use a VDPA end-capped copolymer of AA and VSA which is a vinylidene-diphosphonic acid-terminated acrylic/vinylsulphonate anionic copolymer of weight average molecular weight 5000 - 6000 g/mol provided as a polyanionic solution, wherein the molar ratio of AA (Acrylic acid monomer) and VSA (Vinyl sulphonate monomer) was about 50:50.

Tap Water having the following composition: 12 ppm chloride, 400 ppb Mn, 5 ppm sulfate, 105 ppm TDS (total dissolved solids), 53 ppm bicarbonate, 11 ppm Ca, 0.14 ppm chlorate, 47 CaCO3, 5 ppm Mg, pH 7.7, 14 pm Na, Total alkalinity 53 ppm

### EXAMPLE 1

Quaternary ammonium surfactant (ADBAC) (1.00 g) and amphoteric surfactant were added in test tubes. (The mass of amphoteric surfactant was calculated to reach the same percentage of actives for all amphoteric surfactants). TABLE 1 shows the mass weighted.

**TABLE 1. Mass of amphoteric surfactants added to the test tubes.**

| **Chemical name (wt.% active ingredient)** | **Mass (g)** |
|---|---|
| Disodium Cocoampho Dipropionate at 40% ai | 1.50 |
| Sodium lauro amphoacetate at 30% ai | 2.00 |
| Sodium lauriminodipropionate at 30% ai | 2.00 |
| Cocoamidopropyl Betaine at 30% ai | 2.00 |
| *the term "ai" in the present specification means active ingredient | |

The mixture was shaken. The anionic copolymer as polyanionic solution (0.50 g) was added to the mixture. Then the mixture was shaken a second time. After adding anionic copolymer, all test tubes are turbid.

Then 4 grams 75% aqueous solution of tetrakis(hydroxymethyl)phosphonium sulphate was added to the mixture and it was shaken again.

All test tubes containing mixtures of quaternary ammonium cationic surfactant, amphoteric surfactant, vinylidene-diphosphonic acid-terminated acrylic/vinylsulphonate copolymer and THPS became clear.

The amphoteric surfactants were also mixed with THPS at 75 wt. % ai (active ingredient) individually and, apparently, all of them are compatible with THPS. They were miscible in quaternary ammonium surfactant.

These experiments with these compositions showed the following:
Mixing quaternary ammonium cationic surfactant and the copolymer lead to a white precipitate.

THPS at 75% ai (active ingredient) makes clear the turbid mixtures of quaternary ammonium surfactant, anionic copolymer, and amphoteric surfactant selected from dipropionate amphoteric surfactant, amphoacetate amphoteric surfactant, sodium laurimino dipropionate amphoteric surfactant, and betaine amphoteric surfactant (cocoamidopropyl betaine).

Based on these preliminary experiments all tested amphoteric surfactants (dipropionate amphoteric surfactant, amphoacetate amphoteric surfactant, aminopropionate amphoteric surfactant, and alkylamidopropyl betaine amphoteric surfactant) were found suitable for the invention.

### EXAMPLE 2

### Procedure to prepare the biocide formulations

THPS at 75 wt. % ai, demineralized water, quaternary ammonium surfactant (ADBAC, alkyldimethylbenzylammonium chloride) and the amphoteric surfactant (several options) were weighed in a beaker and the mixture was agitated. Then polyanionic solution of vinylidene-diphosphonic acid-terminated acrylic/vinylsulphonate copolymer was added slowly to the mixture under agitation.

All example formulations (A - C) present 40 wt. % of THPS solution at 75 wt.% ai; 25 wt. % of demineralized water; 10 wt. % of ADBAC solution at 50 wt.% ai; 20% amphoteric surfactant solution at 30 wt.% ai and 5 wt. % of polyanionic solution of VDPA VSA/AA at 20 wt.% ai.

TABLE 2 shows the different amphoteric surfactants used in the formulations A - C.

**TABLE 2. Description of several amphoteric surfactants used to prepare formulations A - C (ai means active ingredient)**

| **Formulation** | **Amphoteric surfactant** |
|---|---|
| A | Cocamidopropyl betaine at 30% ai (wt. %) |
| B | Cocoalkyl dimethyl betaine at 30% ai (wt. %) |
| C | Sodium lauroamphoacetate at 30% ai (wt. %) |

All the formulations prepared with amphoteric surfactants described in TABLE 2 are initially clear. They were kept in room temperature (25°C), oven at 45 °C and under cooling at 5°C during 6 weeks to verify their stability. Formulations were submitted to -5°C and after five hours at this temperature, the formulations were still stable.

### EXAMPLE 3

Procedure to prepare the biocide formulations with different amphoteric surfactants.

THPS at 75% ai, tap water, quaternary ammonium surfactant (ADBAC, alkyldimethylbenzylammonium chloride) and the amphoteric surfactant (several options) were weighed in a beaker and the mixture was agitated. Then polyanionic solution of vinylidene-diphosphonic acid-terminated acrylic/vinylsulphonate copolymer was added slowly to the mixture under agitation.

All example formulations (D - F) present 40% (wt. %) of THPS at 75 wt.% ai; 25% (wt. %) of tap water; 10% (wt. %) of ADBAC at 50%; 20% (wt. %) of amphoteric surfactant at 30% ai and 5% (wt. %) of polyanionic solution of VDPA VSA/AA at 20 wt.% ai.

Formulations D - F were evaluated in terms of stability as described in the Example 2.

TABLE 3 shows the different amphoteric surfactants used in the formulations D - F and summarizes the results observed from long term stability testing under 5°C, 25°C (room temperature) and 45°C, during 6 weeks of biocide formulations

**TABLE 3 - Results observed from long term stability testing of the biocide compositions (D - F) under 5°C, 25°C (room temperature) and 45°C, during 6 weeks for different surfactants.**

| Formulation | Amphoteric surfactant | Observation |
|---|---|---|
| D | Sodium lauro iminodipropionate amphoteric surfactant | became turbid after 10 days at 45°C |
| E | disodium caprylo amphodipropionate amphoteric surfactant | became turbid after 20 days at 5°C |
| F | disodium cocoampho dipropionate | became turbid after 5 weeks at 45°C |

### EXAMPLE 4 - foaming study:

The use of surfactants may lead to foaming issues for the composition. To overcome this issue, the use of foam control agents, such as SAG 1571 silicone antifoam emulsion available from Momentive Performance Materials, Inc., was studied with dosage ranging from 0.05% to 0.20% based on wt. of the composition. The use of this antifoaming agent did not detrimentally impact on the stability of the formulations and overcame the foam issues.

It should be understood that the invention is not limited by the above description but rather by the claims appended hereto.

### Clauses of the invention

The following clauses present aspects of the present invention.
Clause 1. A composition comprising:
   a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
   a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
   at least one quaternary ammonium cationic surfactant; and
   at least one amphoteric surfactant.
Clause 2. The composition according to Claim 1, wherein the amphoteric surfactant is selected from at least one member of the group consisting of:
   carboxybetaines,
   alkyl betaines,
   alkyl dimethyl betaines,
   alkyl amido betaines,
   alkyl amphoacetates,
   alkyl amphodiacetates,
   alkyl amphopropionates,
   alkyl amphodipropionates,
   alkyl amphocarboxypropionates,
   alkyl iminopropionates,
   alkyl iminodipropionates,
   alkyl amphoglycinates,
   alkyl amphocarboxy glycinates,
   alkyl amphopropylsulfonates,
   alkyl sultaines,
   alkylamidopropylhydroxy sultaines,
   sulfobetaines,
   alkyl imidazolines,
   alkylamine oxides, and
   alkali metal (typically sodium or potassium), alkaline earth metal, ammonium or substituted ammonium salts of any of the above amphoteric surfactants, preferably ammonium, sodium or potassium salts thereof.
Clause 3. The composition according to claim 1, in which the THP salt is tetrakis(hydroxymethyl) phosphonium sulphate, phosphite, bromide, fluoride, chloride, phosphate, carbonate, acetate, formate, citrate, borate or silicate.
Clause 4. The composition according to claim 1, in which the THP salt is tetrakis(hydroxymethyl) phosphonium sulphate or chloride, preferably sulphate.
Clause 5. The composition according to any one of claims 1 to 4, wherein the polymer or copolymer of the biopenetrant is a polyacrylate or an acrylic/vinylsulphonate copolymer.
Clause 6. The composition according to any one of claims 1 to 4, in which the biopenetrant is a vinylphosphonic acid end-capped acrylic polymer or a vinylidene-1, 1-diphosphonic acid end-capped acrylic polymer or an acrylic polymer incorporating vinylphosphonic acid and/or vinylidene-1, 1-diphosphonic acid monomers.
Clause 7. The composition according to claim 1, in which the biopenetrant is a vinylphosphonic acid end-capped acrylic/vinylsulphonate copolymer or a vinylidene-1, 1-diphosphonic acid end-capped acrylic/vinylsulphonate copolymer or an acrylate/vinylsulphonate copolymer incorporating vinylphosphonic acid and/or vinylidene-1, 1-diphosphonic acid monomers.
Clause 8. The composition according to any of claims 1 to 7, comprising
   10 to 60 wt. %, preferably 20 to 50 wt. % of the biocide;
   0.5 to 10 wt. %, preferably 1.0 to 4.0 wt. %, of the biopenetrant;
   1 to 30 wt. %, preferably 2 to 10 wt. %, more preferably 3 to 6 wt. %, of the quaternary ammonium cationic surfactant; and
   1 to 25 wt. %, preferably 3 to 10 wt. %, more preferably 4 to 7 wt. %, of the amphoteric surfactant.
Clause 9. The composition according to claim 1, in which the quaternary ammonium cationic surfactant comprises at least one mono-cationic surfactant according to formula (II): 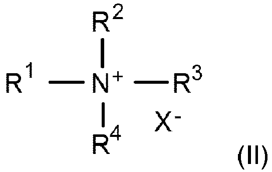 wherein:
   R1, R2, R3, and R4 are each independently an organic group;
   preferably R1 and R2 are an aryl or alkaryl group or C8 to C30 alkyl group; preferably R3 and R4 are an aryl or alkaryl group or a C1 to C30 alkyl group; and
   X- is an anion, typically a chloride, bromide, methosulfate, ethosulfate, lactate, saccharinate, acetate or phosphate anion.
Clause 10. The composition according to claim 1, wherein the quaternary ammonium cationic surfactant comprises at least one of Alkyl Dimethyl Benzyl Ammonium Chloride, didecyldimethyl ammonium chloride, dioctyldimethyl ammonium chloride, cetyl trimethyl ammonium bromide, cetyl trimethyl ammonium chloride, myristyl trimethyl ammonium bromide, stearyl dimethyl benzyl ammonium chloride (also known as stearalkonium chloride), oleyl dimethyl benzyl ammonium chloride, olealkonium chloride, lauryl/myristryl trimethyl ammonium methosulfate, cetyl dimethyl (2)hydroxyethyl ammonium dihydrogen phosphate, cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride, and/or behenamidopropyl ethyl dimonium ethosulfate.
Clause 11. The composition according to claim 1, in which the quaternary ammonium cationic surfactant comprises at least one benzalkonium salt having a benzyl group, one 8 to 20 C alkyl group and two 1 to 4 carbon alkyl groups linked to its quaternary nitrogen atom.
Clause 12. The composition according to claim 1, in which the amphoteric surfactant comprises at least one member of the group consisting of:
   carboxybetaine of the formula: R3N+CH2COO- , wherein each R is an alkyl, cycloalkyl, alkenyl or alkaryl group and preferably at least one, and preferably not more than one R, has an average of from 8 to 20, more preferably, 10 to 18 aliphatic carbon atoms and each other R has an average of from 1 to 4 carbon atoms, alkyl betaines, wherein alkyl represents an alkyl group having 8 to 20 carbon atoms, preferably an alkyl group having 12 to 18 carbon atoms;
   alkyl dimethyl betaine surfactants, wherein alkyl represents an alkyl group having 8 to 20 carbon atoms, preferably an alkyl group having 12 to 18 carbon atoms;
   alkyl amido betaines, typically alkyl amidopropyl betaines, wherein alkyl represents an alkyl group having 8 to 20 carbon atoms, preferably an alkyl group having 12 to 18 carbon atoms;
   alkyl amphoacetates and alkyl amphodiacetates, wherein alkyl represents an alkyl group having 8 to 20 carbon atoms, preferably an alkyl group having 12 to 18 carbon atoms;
   alkyl amphopropionates or alkyl amphodipropionates, wherein alkyl represents an alkyl group having 8 to 20 carbon atoms, preferably an alkyl group having 12 to 18 carbon atoms;
   alkyl amphocarboxypropionates, wherein alkyl represents an alkyl group having 8 to 20 carbon atoms, preferably an alkyl group having 12 to 18 carbon atoms,
   alkyl iminopropionates, alkyl iminodipropionates, wherein alkyl represents an alkyl group having 8 to 20 carbon atoms, preferably an alkyl group having 12 to 18 carbon atoms,
   alkyl amphoglycinates, alkyl amphocarboxy glycinates, wherein alkyl represents an alkyl group having 8 to 20 carbon atoms, preferably an alkyl group having 12 to 18 carbon atoms, and
   alkyl amphopropylsulfonates, wherein alkyl represents an alkyl group having 8 to 20 carbon atoms, preferably an alkyl group having 12 to 18 carbon atoms,
   alkyl sultaines and alkyl amphohydroxypropyl sultaines, wherein
   alkyl represents an alkyl group having 8 to 20 carbon atoms, preferably an alkyl group having 12 to 18 carbon atoms such as, an alkyl amphohydroxypropyl;
   sulfobetaines, preferably dimethylsulfinioacetate;
   alkyl imidazolines, wherein alkyl represents an alkyl group having 8 to 20 carbon atoms, preferably an alkyl group having 12 to 18 carbon atoms;
   alkylamine oxides, wherein alkyl represents an alkyl group having 8 to 20 carbon atoms, preferably an alkyl group having 12 to 18 carbon atoms; and
   the alkali metal (typically sodium or potassium), alkaline earth metal, ammonium or substituted ammonium salts of any of the above amphoteric surfactants, preferably ammonium, sodium or potassium salts thereof.
Clause 13. The composition according to claim 1, in which the amphoteric surfactant comprises at least one member of the group consisting of:
   alkyl betaines, wherein alkyl represents an alkyl group having 8 to 20 carbon atoms, preferably an alkyl group having 12 to 18 carbon atoms;
   alkyl dimethyl betaine surfactants, wherein alkyl represents an alkyl group having 8 to 20 carbon atoms, preferably an alkyl group having 12 to 18 carbon atoms;
   alkyl amido betaines, typically alkyl amidopropyl betaines, wherein alkyl represents an alkyl group having 8 to 20 carbon atoms, preferably an alkyl group having 12 to 18 carbon atoms;
   alkyl amphoacetates and alkyl amphodiacetates, wherein alkyl represents an alkyl group having 8 to 20 carbon atoms, preferably an alkyl group having 12 to 18 carbon atoms;
   alkyl amphopropionates or alkyl amphodipropionates, wherein alkyl represents an alkyl group having 8 to 20 carbon atoms, preferably an alkyl group having 12 to 18 carbon atoms; and
   alkyl amphocarboxypropionates, wherein alkyl represents an alkyl group having 8 to 20 carbon atoms, preferably an alkyl group having 12 to 18 carbon atoms; and
   the alkali metal (typically sodium or potassium), alkaline earth metal, ammonium or substituted ammonium salts of any of the above amphoteric surfactants, preferably ammonium, sodium or potassium salts thereof.
Clause 14. The composition according to claim 1, in which the amphoteric surfactant comprises at least one member of the group consisting of:
   alkyl dimethyl betaine surfactants, wherein alkyl represents an alkyl group having 8 to 20 carbon atoms, more typically wherein
   alkyl represents an alkyl group having 12 to 18 carbon atoms,
   alkyl amido betaines, typically alkyl amidopropyl betaines,
   wherein alkyl represents an alkyl group having 8 to 20 carbon atoms, more typically wherein alkyl represents an alkyl group having 12 to 18 carbon atoms,
   alkyl amphoacetates and alkyl amphodiacetates, wherein alkyl represents an alkyl group having 8 to 20 carbon atoms, more typically wherein alkyl represents an alkyl group having 12 to 18 carbon atoms, and
   the alkali metal (typically sodium or potassium), alkaline earth metal, ammonium or substituted ammonium salts of any of the above amphoteric surfactants, preferably ammonium, sodium or
   potassium salts thereof.
Clause 15. The composition according to claim 1, in which the amphoteric surfactant comprises at least one member of the group consisting of:
   alkyl amidopropyl betaine amphoteric surfactant,
   alkyldimethyl betaine amphoteric surfactant,
   alkyl amphoacetate amphoteric surfactant, and
   alkali metal (typically sodium or potassium), alkaline earth metal, ammonium or substituted ammonium salts of any of the above amphoteric surfactants, preferably ammonium, sodium or potassium salts thereof.
Clause 16. The composition according to claim 1, in which the amphoteric surfactant comprises at least one member of the group consisting of:
   cocoyl betaine, lauryl betaine, octyl betaine, coco alkyldimethyl betaine, cocamidopropyl betaine, cocoyl amphoacetate, lauryl amphoacetate, cocoyl amphodiacetate, lauryl amphodiacetate,
   cocoyl amphopropionate, lauryl amphopropionate, cocoyl amphodipropionate, lauryl amphodipropionate, and the alkali metal (typically sodium or potassium), alkaline earth metal,
   ammonium or substituted ammonium salts of any of the above amphoteric surfactants, preferably ammonium, sodium or potassium salts thereof.
Clause 17. A method of treating a water system contaminated, or liable to contamination, with microorganisms selected from at least one of bacteria, archaea, fungi and algae, which method comprises adding to the system separately or together,
   a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
   a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
   a biocidally active amount of at least one quaternary ammonium cationic surfactant; and
   at least one amphoteric surfactant;
   thereby reducing population of the microorganisms by at least 90%.
Clause 18. The method of treating according to claim 18, further comprising dissolving metal sulphide scale and/or schmoo.
Clause 19. The method of treating according to claim 18, wherein the microorganisms include planktonic (free-swimming) and/or sessile (attached) bacteria.
Clause 20. The method of treating according to claim 18, wherein the microorganisms include general heterotrophic bacteria, acid producing sulphate reducing bacteria or arachea.
Clause 21. The method of treating according to claim 18, wherein the metal sulphide is iron sulphide.
Clause 22. The method of treating according to claim 18, wherein the reducing population of the microorganisms is by at least 99% as determined by ATP testing.
Clause 23. The method of treating according to claim 18, wherein the water system treated is cooling water system and the population of the microorganisms is reduced by at least 99% as determined by ASTM E645-18.
Clause 24. A method of treating a water system contaminated, or liable to contamination, with microorganisms selected from at least one of bacteria, archaea, and fungi algae, which method comprises adding to said system separately or together, the composition according to any of claims 1-16, thereby reducing the population of the microorganisms by at least 90 %.
Clause 25. A method of treating a water system containing or in contact with a metal sulphide scale or schmoo, which method comprises adding to said system separately or together,
   a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
   a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone,
   a biocidally active amount of at least one quaternary ammonium cationic surfactant, and
   at least one amphoteric surfactant;
   thereby dissolving at least part of the scale or schmoo.
Clause 26. The method of Claim 25, wherein the scale is iron sulphide scale.
Clause 27. The method of claim 25, wherein the water system is used or is present in oil or gas extraction, production or transportation.
Clause 28. The method of claim 25, wherein oil or gas extraction, production or transportation comprises injection and produced water, source water/aquifer water for waterflooding and hydraulic fracturing, pond water, holding tank water, functional fluids, drilling muds, completion and workover fluids, hydrotest fluids, stimulation fluids, packer fluids, fracturing fluids, oil and gas wells, separation, storage and transportation systems, oil and gas pipelines, oil and gas vessels, or fuel.
Clause 29. The method of claim 25, wherein the water system is cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, textiles, leather and leather production system, or a system used therewith.

## Claims

1. A composition comprising:
a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
at least one quaternary ammonium cationic surfactant; and
at least one amphoteric surfactant.

2. The composition according to Claim 1, wherein the amphoteric surfactant is selected from at least one member of the group consisting of:
carboxybetaines,
alkyl betaines,
alkyl dimethyl betaines,
alkyl amido betaines,
alkyl amphoacetates,
alkyl amphodiacetates,
alkyl amphopropionates,
alkyl amphodipropionates,
alkyl amphocarboxypropionates,
alkyl iminopropionates,
alkyl iminodipropionates,
alkyl amphoglycinates,
alkyl amphocarboxy glycinates,
alkyl amphopropylsulfonates,
alkyl sultaines,
alkylamidopropylhydroxy sultaines,
sulfobetaines,
alkyl imidazolines,
alkylamine oxides, and
alkali metal (typically sodium or potassium), alkaline earth metal,
ammonium or substituted ammonium salts of any of the above amphoteric surfactants, preferably ammonium, sodium or potassium salts thereof.

3. The composition according to claim 1 or 2, in which the THP salt is tetrakis(hydroxymethyl) phosphonium sulphate or chloride, preferably sulphate.

4. The composition according to any one of claims 1 to 3, wherein the polymer or copolymer of the biopenetrant is a polyacrylate or an acrylic/vinylsulphonate copolymer.

5. The composition according to any of claims 1 to 4, comprising
10 to 60 wt. %, preferably 20 to 50 wt. % of the biocide;
0.5 to 10 wt. %, preferably 1.0 to 4.0 wt. %, of the biopenetrant;
1 to 30 wt. %, preferably 2 to 10 wt. %, more preferably 3 to 6 wt. %, of the quaternary ammonium cationic surfactant; and
1 to 25 wt. %, preferably 3 to 10 wt. %, more preferably 4 to 7 wt. %, of the amphoteric surfactant.

6. The composition according to anyone of claims 1 to 5, wherein the quaternary ammonium cationic surfactant comprises at least one of Alkyl Dimethyl Benzyl Ammonium Chloride, didecyldimethyl ammonium chloride, dioctyldimethyl ammonium chloride, cetyl trimethyl ammonium bromide, cetyl trimethyl ammonium chloride, myristyl trimethyl ammonium bromide, stearyl dimethyl benzyl ammonium chloride (also known as stearalkonium chloride), oleyl dimethyl benzyl ammonium chloride, olealkonium chloride, lauryl/myristryl trimethyl ammonium methosulfate, cetyl dimethyl (2)hydroxyethyl ammonium dihydrogen phosphate, cocotrimonium chloride, distearyldimonium chloride, wheat germ-amidopropalkonium chloride, stearyl octyldimonium methosulfate, isostearaminopropalkonium chloride, dihydroxypropyl PEG-5 linoleaminium chloride, PEG-2 stearmonium chloride, Quaternium 18, Quaternium 80, Quaternium 82, Quaternium 84, behentrimonium chloride, dicetyl dimonium chloride, behentrimonium methosulfate, tallow trimonium chloride, and/or behenamidopropyl ethyl dimonium ethosulfate.

7. The composition according to anyone of claims 1 to 6, in which the amphoteric surfactant comprises at least one member of the group consisting of:
alkyl amidopropyl betaine amphoteric surfactant,
alkyldimethyl betaine amphoteric surfactant,
alkyl amphoacetate amphoteric surfactant, and
alkali metal (typically sodium or potassium), alkaline earth metal, ammonium or substituted ammonium salts of any of the above amphoteric surfactants, preferably ammonium, sodium or potassium salts thereof.

8. The composition according to anyone of claims 1 to 7, in which the amphoteric surfactant comprises at least one member of the group consisting of:
cocoyl betaine, lauryl betaine, octyl betaine, coco alkyldimethyl betaine, cocamidopropyl betaine, cocoyl amphoacetate, lauryl amphoacetate, cocoyl amphodiacetate, lauryl amphodiacetate, cocoyl amphopropionate, lauryl amphopropionate, cocoyl amphodipropionate, lauryl amphodipropionate, and the alkali metal (typically sodium or potassium), alkaline earth metal, ammonium or substituted ammonium salts of any of the above amphoteric surfactants, preferably ammonium, sodium or potassium salts thereof.

9. Use of a composition comprising:
a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) monomer or vinylidene-1, 1-diphosphonic acid (VDPA) monomer or having vinylphosphonic acid and/or vinylidene-1, 1-diphosphonic acid monomers incorporated into the polymer or copolymer backbone, or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone;
a biocidally active amount of at least one quaternary ammonium cationic surfactant; and
at least one amphoteric surfactant;
for treating a water system contaminated, or liable to contamination, with microorganisms selected from at least one of bacteria, archaea, fungi and algae, thereby reducing population of the microorganisms by at least 90%.

10. The use according to claim 9, further comprising dissolving metal sulphide scale, preferably iron sulphide and/or schmoo.

11. The use according to claim 9 or 10, wherein the reducing population of the microorganisms is by at least 99% as determined by ATP testing.

12. The use according to anyone of claims 9 to 11, wherein the water system treated is cooling water system and the population of the microorganisms is reduced by at least 99% as determined by ASTM E645-18.

13. Use of a composition comprising:
a biocidally active amount of a biocide comprising a tetrakis(hydroxyalkyl)phosphonium salt, wherein the salt is selected from the group consisting of sulphate, phosphite, bromide, fluoride, chloride, phosphate, carbonate, acetate, formate, citrate, borate, and silicate,
a biopenetrant comprising a polymer of an unsaturated carboxylic acid or a copolymer of an unsaturated carboxylic acid with an unsaturated sulphonic acid, the polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone or salt(s) of said polymer or copolymer being either terminated by vinylphosphonic acid (VPA) or vinylidene-1, 1-diphosphonic acid (VDPA) or having vinylphosphonic acid (VPA) and/or vinylidene-1, 1-diphosphonic acid (VDPA) monomers incorporated into the polymer or copolymer backbone,
a biocidally active amount of at least one quaternary ammonium cationic surfactant, and
at least one amphoteric surfactant;
for treating a water system containing or in contact with a metal sulphide scale or schmoo, thereby dissolving at least part of the scale or schmoo.

14. The use according to claim 13, wherein the scale is iron sulphide scale.

15. The use according to anyone of claims 13 or 14, wherein the water system is cooling water, air washer, heat exchangers, boiler water, pulp and paper mill water, other industrial process water, ballast water, wastewater, metalworking fluids, latex, paint, coatings, adhesives, inks, tape joint compounds, pigment, water-based slurries, membrane and filtration systems, textiles, leather and leather production system, or a system used therewith.
